# EUROPÄISCHE PATENTANMELDUNG

(11) **EP 2 586 919 A2**
(43) Veröffentlichungstag der Anmeldung: **01.05.2013**
(21) Anmeldenummer: 12189732.6
(22) Anmeldetag: 24.10.2012
(51) Int. Cl.: E03C 1/04, F16K 27/04

(54) **Sanitärarmatur**

(30) Priorität: 27.10.2011 DE 102011085346
(71) Anmelder: Hansgrohe SE, 77761 Schiltach (DE)
(72) Erfinder: Kronenbitter, Bernd, 77787 Nordrach (DE); Schorer, Jürgen, 77761 Schiltach (DE)
(74) Vertreter: Patentanwälte Ruff, Wilhelm, Beier, Dauster & Partner

(57) **Zusammenfassung**

Eine Sanitärarmatur enthält ein Sockelbauteil, das zur Befestigung der Sanitärarmatur an einer Unterkonstruktion ausgebildet ist. Mit diesem Sockelbauteil ist in axialer Verlängerung ein Aufnahmebauteil axial und drehfest verbunden, das einen Aufnahmeraum für einen Anschlussboden und eine Ventilkartusche enthält. Diese beiden Bauteile bilden die tragende Struktur der Sanitärarmatur. An dieser Struktur wird ein äußeres Gehäuse angebracht, das aus beliebigem Material bestehen kann, da es keine tragende Funktion hat und nicht mit dem Wasser in Berührung kommt. Durch Austausch des Sockelbauteils lassen sich in ihrer Größe und Form unterschiedliche Sanitärarmaturen darstellen, bei denen das Aufnahmebauteil mit Ventilkartusche, Anschlussboden und Befestigungseinrichtung für die Ventilkartusche in dem Aufnahmebauteil unverändert sind.

## Beschreibung

Die Erfindung betrifft den Aufbau von Sanitärarmaturen.

Es ist bereits ein sanitäres Wasserventil bekannt, bei dem die Wasserwege innerhalb der Sanitärarmatur zur Vermeidung eines Kontakts mit dem durch sie geführten Wasser mittels einer aus einem gesundheitlich unbedenklichen bleifreien Material bestehenden wasserdichten Abschirmung versehen sind. Damit wird es möglich, eine gesundheitlich unbedenkliche Sanitärarmatur zu schaffen, auch mit einem Gehäuse aus einem gesundheitlich bedenklichen Material (EP 693150).

Weiterhin bekannt ist ein Einhebelmischer, bei dem innerhalb des metallischen Armaturengehäuses ein Einsatz mit einem Aufnahmeraum für die Ventilkartusche angebracht ist. Die Befestigung der Sanitärarmatur geschieht an dem Gehäuse selbst (DE 19756971 A1, DE 19756972 A1).

Weiterhin bekannt ist eine Sanitärarmatur mit einem von einem Gehäuse umgebenen Basisteil, innerhalb dessen ein Aufnahmeraum für die Ventilkartusche ausgebildet ist. Zwischen dem Aufnahmeraum für die Ventilkartusche und der Verbindung mit den Zuleitungen ist ein Adapterbauteil innerhalb des Basisteils angeordnet. Hier übernimmt das Basisteil die tragende Funktion (EP 1134468 B1).

Der Erfindung liegt die Aufgabe zu Grunde, eine Sanitärarmatur zu schaffen, die einerseits den Anforderungen an Gesundheitsvorschriften entspricht und andererseits unterschiedliche Formen und Größen aufweisen kann.

Zur Lösung dieser Aufgabe schlägt die Erfindung eine Sanitärarmatur mit den im Anspruch 1 genannten Merkmalen vor. Weiterbildungen der Erfindung sind Gegenstand von Unteransprüchen. Die Erfindung schlägt ebenfalls einen Satz von Sanitärarmaturen vor, die sich durch Austausch einzelner Bauelemente unterscheiden.

Die Sanitärarmatur enthält also mehrere Teile, die an ihre spezielle Aufgabe angepasst sind. Das Sockelbauteil dient dazu, die Sanitärarmaturen an einer Unterkonstruktion zu befestigenden und damit auch die Errichtung der Sanitärarmatur vorzugeben. An diesem Sockelbauteil ist in axialer Verlängerung das Aufnahmebauteil angebracht, das einen Aufnahmeraum für die Ventilkartusche und für den Anschlussboden aufweist, in dem die Zuleitungen münden. Um die Gesundheitsvorschriften zu erfüllen, kann dieses Aufnahmebauteil aus einem gesundheitlich unbedenklichen Material bestehen. Das Gehäuse, das diese beiden Teile umgibt, hat hauptsächlich ästhetische und optische Funktionen. Es hat keine tragende Funktion bezüglich der wasserführenden Teile. Es kann aber derart an dem Sockelbauteil und/oder an dem Aufnahmebauteil festgelegt sein, dass die Gesamtstabilität verbessert wird. Insbesondere kann ein Deckelteil derart an dem Aufnahmebauteil angebracht sein, dass es erheblich zur mechanischen Stabilität des Auslaufs beiträgt.

Das Gehäuse seinerseits kann aus mehreren Teilen bestehen, beispielsweise einem die Armatur umgebenden Körper und einem Deckel, der eine obere Öffnung des Gehäusekörpers abdeckt. Eine solche Öffnung kann sinnvoll sein, um beispielsweise das Sockelbauteil, das Aufnahmebauteil und/oder die Kartusche einzusetzen. Der Deckel dient dazu, nach dem Einsetzen diese Öffnung zu verschließen.

Der Anschlussboden der Armatur wird in den Aufnahmeraum des Aufnahmebauteils eingesetzt, bis er auf einer Schulter aufliegt. Anschlie-βend wird die Kartusche in den Aufnahmeraum eingeschoben, bis sie auf dem Anschlussboden aufliegt. Dann erfolgt die Arretierung bzw. Festlegung der Kartusche und damit auch des Anschlussbodens durch eine von der Oberseite her eingeschraubte Befestigungsmutter.

Erfindungsgemäß kann vorgesehen sein, dass die Kartusche im Bereich ihres oberen Randes gegenüber der Befestigungsmutter abgedichtet ist, wobei zusätzlich und/oder alternativ die Befestigungsmutter auch gegenüber dem Aufnahmebauteil abgedichtet sein kann.

In Weiterbildung der Erfindung kann vorgesehen sein, dass der Aufnahmebauteil einen seitlichen radial aus dem Aufnahmebauteil heraus führenden Abgangsstutzen aufweist, der mit dem Aufnahmeraum für die Ventilkartusche in Verbindung steht. Der Abgangsstutzen kann dazu verwendet werden, einen Mischwasserausgang aus der Ventilkartusche an einer anderen Stelle als durch den Anschlussboden herauszuführen.

Insbesondere kann er dazu verwendet werden, einen Auslauf aus der Sanitärarmatur mit Wasser zu versorgen. Hierzu kann vorgesehen sein, dass in dem Gehäuse ein Auslaufelement angeordnet ist, das mit dem gerade erwähnten Abgangsstutzen über einen Schlauch oder eine sonstige Leitung in Verbindung steht.

In Weiterbildung der Erfindung kann vorgesehen sein, dass der Deckel des Gehäuses mit dem Körper des Gehäuses über eine Schnappverbindung verbunden ist. Möglich ist ebenfalls eine Verbindung durch Kleben und/oder durch Schweißen sowie gegebenenfalls auch eine Klettverbindung.

Alternativ oder zusätzlich kann ebenfalls vorgesehen sein, dass der Deckel des Gehäuses mithilfe einer Mutter an dem Aufnahmebauteil befestigt ist.

Es kann ebenfalls vorgesehen sein, dass der Deckel kraftschlüssig an dem Aufnahmebauteil festgelegt ist.

Eine weitere Möglichkeit besteht darin, dass der Deckel das Aufnahmebauteil mit einem flanschartigen Fortsatz übergreift.

Der Deckel gibt dem Auslauf seine Festigkeit bzw. Stabilität durch die entsprechende Anbringung am Aufnahmebauteil.

Es wurde bereits erwähnt, dass die Aufgabe des Sockelbauteils in erster Linie darin besteht, die Armatur insgesamt an einer Unterkonstruktion zu befestigen. Es ist daher sinnvoll, das Sockelbauteil aus einem entsprechend widerstandsfähigen bzw. stabilen Material herzustellen.

Für das Aufnahmebauteil, das zur Erfüllung gesundheitliche Vorschriften aus einem gesundheitlich unbedenklichen Material bestehen soll, kann erfindungsgemäß ein entsprechender Kunststoff verwendet werden.

Die Verbindung zwischen dem Sockelbauteil und dem Aufnahmebauteil kann eine Schnappverbindung und/oder eine Rastverbindung und/oder eine Bajonettverbindung sein. Die Verbindung muss sowohl in axialer Richtung als auch in Umfangsrichtung gesichert sein.

Vorzugsweise sind alle Verbindungen nach außen abgedichtet, so dass sich im Inneren, d.h. zwischen den wasserführenden Bauteilen einerseits und dem Gehäuse andererseits, kein Wasser sammeln kann und damit kein Nährboden für eine Verkeimung gebildet wird. Auch eventuelle Durchführungen für Betätigungselemente beispielsweise für Ablaufventile, also externe Ventilbetätigungen, sind abgedichtet.

Die Anordnung und Ausbildung der Sanitärarmatur wird durch Größe und Form von Sockelbauteil und Aufnahmebauteil bestimmt, während das Gehäuse die äußere Form bestimmt. Es ist daher möglich, unterschiedliche Sanitärarmaturen, das heißt beispielsweise unterschiedlich hohe Sanitärarmaturen oder Sanitärarmaturen mit unterschiedlicher Neigung gegenüber der horizontalen Befestigungsfläche, zu verwirklichen, indem nur das Sockelbauteil ausgetauscht wird. Natürlich muss dann auch ein anderes Gehäuse verwendet werden, aber das Aufnahmebauteil, die Ventilkartusche, üblicherweise auch der Griff für ein Betätigungselement, können unverändert bleiben. Auch ein Auslaufelement, das über einen Schlauch angeschlossen ist, kann unverändert bleiben, da man ja den Schlauch austauschen oder einen in seiner Länge variablen Wellschlauch verwenden kann.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen axialen Schnitt durch ein erstes Ausführungsbeispiel einer Sanitärarmatur;
- Figur 2: einen Schnitt durch eine zweite Ausführungsform;
- Figur 3: in vergrößertem Maßstab einen Teilschnitt durch die Sanitärarmatur nach der Erfindung.

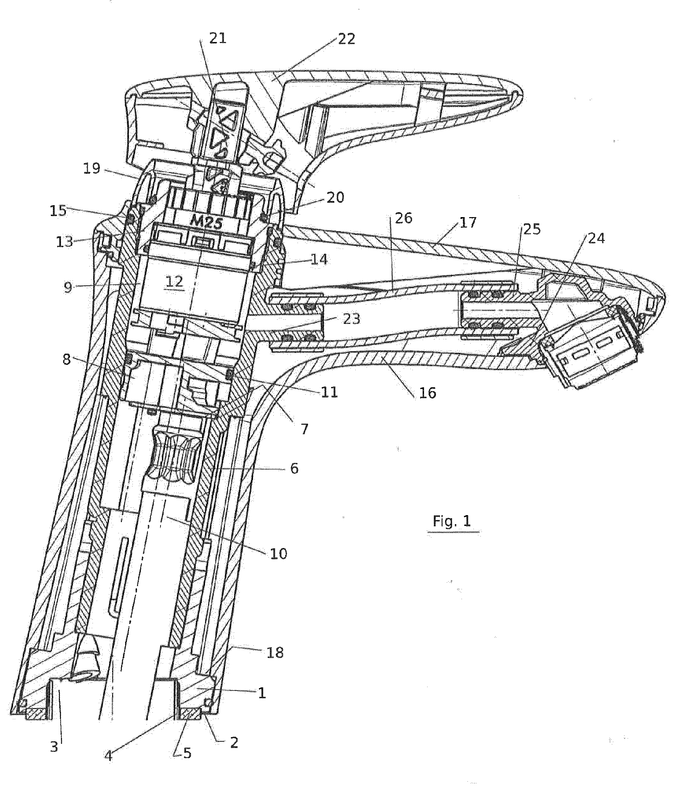

Die in Figur 1 in einem Schnitt dargestellte Sanitärarmatur enthält ein Sockelbauteil 1. In der Unterseite des Sockelbauteils 1 ist eine Gewindebohrung 3 eingebracht, in die, angedeutet, eine Gewindehülse 4 eingeschraubt ist, mit der das Sockelbauteil 1 mit seiner Unterseite 2 auf einer Unterkonstruktion aufliegend festgeschraubt wird. Um die Gewindehülse sie herum ist ein Dichtring 5 eingelegt.

Das Sockelbauteil 1 verläuft oberhalb seiner Unterseite leicht schräg. In das hohle Sockelbauteil 1 ist von oben her einen Aufnahmebauteil 6 eingesteckt und sowohl in axialer Richtung als auch in Umfangsrichtung gesichert. Dieses Aufnahmebauteil verläuft in der gleichen Richtung wie das Sockelbauteil. Es enthält in seinem Innenraum etwa auf halber Länge eine Schulter 7, auf der einen Boden 8 aufliegt. Oberhalb der Schulter 7 ist in dem Aufnahmebauteil ein Aufnahmeraum 9 gebildet, in dem, wie bereits erwähnt, zunächst der Boden 8 angeordnet ist. Der Boden achte dient zum Anschluss von Zuleitungen, im dargestellten Beispiel handelt es sich um Zuleitungsschläuche 10. Der Anschlussboden 8 ist mithilfe einer Dichtung 11 gegenüber dem Aufnahmebauteil 6 abgedichtet. Oberhalb des Anschlussbodens 8 ist in dem Aufnahmeraum 9 eine Ventilkartusche 12 angeordnet, die auf dem Anschlussboden 8 aufliegt. Die Ventilkartusche hat rings um einen Abstand von den Wänden des Aufnahmeraums 9. Sie ist in dem Aufnahmeraum 9 mithilfe einer Befestigungsmutter 13 festgelegt, die von oben in die Ausmündung des Aufnahmeraums 9 eingeschraubt ist. Zwischen der Kartusche 12 und der Befestigungsmutter 13 ist eine Dichtung 14 eingesetzt. Die Befestigungsmutter ist durch eine zweite Dichtung 15 gegenüber dem Aufnahmebauteil abgedichtet.

Über die Kombination aus Sockelbauteil und Aufnahmebauteil 6 ist ein Gehäuse aufgesetzt, das aus einem Gehäusekörper 16 und einem Gehäusedeckel 17 besteht. Der Gehäusekörper 16 beruht auf einer Schulter 18 des Sockelbauteils 1 auf. Die Unterseite des Gehäusekörpers 16 verläuft bündig mit der Unterseite 2 des Sockelbauteils 1.

Der Deckel 17 des Gehäuses ist längs seines Randes mit dem Gehäusekörper 16 durch eine Schnappverbindung verbunden.

Zur optischen Abdeckung ist auf die Befestigungsmutter 13 noch eine Rosette 19 aufgeschraubt oder aufgeschnappt, die ebenfalls mit einer Dichtung 20 gegenüber der Befestigungsmutter abgedichtet ist. Aus der Oberseite der Ventilkartusche ragt ein Betätigungsschaft 21 heraus, an dem ein Griff 22 festgeschraubt ist.

Aus dem Aufnahmebauteil 6 ragt im oberen Bereich ein Abgangsstutzen 23 heraus, der mit dem Aufnahmeraum 9 in Verbindung steht.

In dem Gehäusekörper 16 ist ein Auslaufeinsatz 24 eingesetzt und dort befestigt, bei dem es sich um ein selbstständiges Bauteil handelt. Der Auslaufeinsatz 24 weist einen nach innen gerichteten Stutzen 25 auf, dessen Außendurchmesser etwa dem Außendurchmesser des Abgangsstutzens 22 entspricht. Die beiden Stutzen sind durch einen Schlauch 26 miteinander verbunden.

Das Gehäuse 16, 17 ist an dem Aufnahmebauteil 6 durch Formschluss angebracht und umgibt die Kombination aus Sockelbauteil 1 und Aufnahmebauteil 6 über alle mit Ausnahme der durch die Rosette 19 abgedeckten Öffnung.

Das in die Sanitärarmatur gelangende Wasser kommt, sobald es die Zuleitung 10 verlässt, nur mit dem Aufnahmebauteil 6, natürlich auch der Ventilkartusche 12, dem Schlauch 26 und dem Auslaufeinsatz 24 in Berührung.

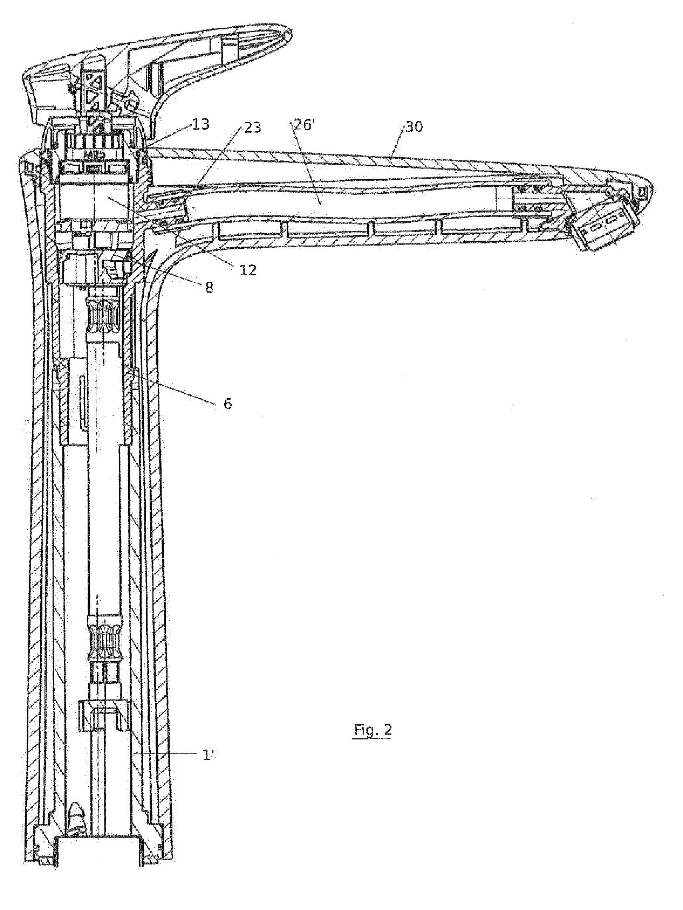

Die Sanitärarmatur in Figur 2 hat ersichtlich einem vollständig andere Größe und ein vollständig anders aussehen. Zum einen steht sie nicht schräg auf der Befestigungsfläche, sondern senkrecht, zum anderen ist sie deutlich höher, und auch die Auslaufschnauze 30 ist deutlich länger. Das Aufnahmebauteil 6 ist aber identisch zu der Ausführungsform nach Figur 1, ebenso die Ventilkartusche 12, der die Befestigungsmutter 13, die Rosette 19, und der Griff 22. Geändert ist in erster Linie das Gehäuse und das Sockelbauteil 1.

Man kann also durch Austausch nur weniger Bauteile eine vollständig anders dimensionierte und geformte Sanitärarmatur erhalten.

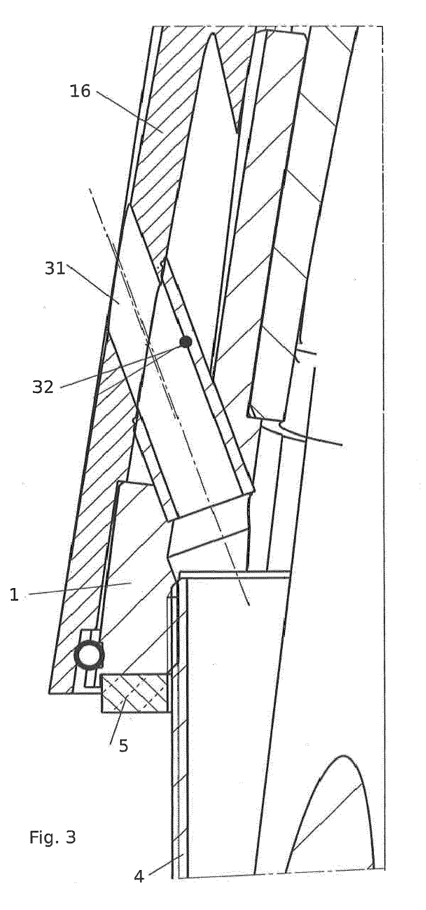

Die Figur 3 zeigt in vergrößertem Maßstab, wie eine Durchführung für ein externes Ventilbetätigungselement ausgebildet sein kann. In dem Gehäuse 16 ist eine schräge Öffnung 31 ausgebildet. In Verlängerung dieser Öffnung 31 ist ein aus Elastomermaterial bestehendes Schlauchelement 32 eingesetzt. Dieses Schlauchelement 32 wird von unten her, also durch das Rohr 4, in das Gehäuse 16 eingesetzt. Dazu wird es zusammengedrückt oder zusammengefaltet, in die Öffnung hinein geschoben und dann losgelassen. Dabei entfaltet es sich wieder und nimmt die dargestellte Position ein. Damit ist auch diese Durchführung für beispielsweise eine Zugstange, flüssigkeitsdicht abgedichtet.

## Patentansprüche

1. Sanitärarmatur, mit
1.1 einem Sockelbauteil (1, 1') mit einer Befestigungseinrichtung zum Befestigen des Sockelbauteils (1, 1') und damit der Sanitärarmatur an einer Unterkonstruktion,
1.2 einem mit dem Sockelbauteil (1, 1') verbindbaren bzw. verbundenen Aufnahmebauteil (6), das
1.3 einen Aufnahmeraum (9) für eine Ventilkartusche (12) und einen Boden (8) zum Anschluss der Zulaufleitungen (10) aufweist und 1.4 mindestens teilweise wasserführend ausgebildet ist, sowie mit
1.5 einem Gehäuse (16, 17; 30), das
1.6 das Sockelbauteil (1, 1') und das Aufnahmebauteil (6) mit Ausnahme eines Zugangs für die Ventilkartusche (12) vollständig umgibt und
1.7 an dem Aufnahmebauteil (6) und gegebenenfalls an dem Sockelbauteil (1, 1 ') befestigt ist.

2. Sanitärarmatur nach Anspruch 1, bei der das Gehäuse (16, 17) aus einem das Sockelbauteil und das Aufnahmebauteil umgebenden Körper (16) und einem oberen Deckel (17) aufgebaut ist, der eine den Zugang mindestens zu dem Aufnahmeraum (9) für die Ventilkartusche (12) ermöglichende Öffnung in dem Gehäuse abdeckt.

3. Sanitärarmatur nach Anspruch 1 oder 2, bei der die Ventilkartusche (12) und der Anschlussboden (8) über eine in den Aufnahmeraum (9) des Aufnahmebauteils (6) eingeschraubte Mutter (13) festgelegt sind.

4. Sanitärarmatur nach Anspruch 3, bei der die Ventilkartusche (12) an ihrem oberen Rand gegenüber der Befestigungsmutter (13) abgedichtet ist.

5. Sanitärarmatur nach Anspruch 3 oder 4, bei der die Befestigungsmutter (13) zu dem Aufnahmebauteil (6) abgedichtet ist.

6. Sanitärarmatur nach einem der vorhergehenden Ansprüche, bei der das Aufnahmebauteil (6) einen seitlich angeordneten mit dem Aufnahmeraum (9) für die Ventilkartusche (12) in Verbindung stehenden Abgangsstutzen (23) aufweist.

7. Sanitärarmatur nach Anspruch 6, mit einem in dem Gehäuse angeordneten Auslaufelement (24), das mit dem Abgangsstutzen (23) des Aufnahmebauteils (6) über eine Leitung, insbesondere einen Schlauch (26), verbunden ist.

8. Sanitärarmatur nach einem der Ansprüche 2 bis 7, bei der der Körper (16) des Gehäuses mit dem Deckel (17) verschnappt ist.

9. Sanitärarmatur nach einem der Ansprüche 2 bis 8, bei der der Deckel (17) mithilfe einer Mutter an dem Aufnahmebauteil (6) befestigt ist.

10. Sanitärarmatur nach einem der Ansprüche 2 bis 8, bei der der Deckel (17) kraftschlüssig an dem Aufnahmebauteil (6) festgelegt ist.

11. Sanitärarmatur nach einem der Ansprüche 2 bis 10, bei der der Deckel das Aufnahmebauteil mit einem flanschartigen Fortsatz übergreift.

12. Sanitärarmatur nach einem der vorhergehenden Ansprüche, bei der das Sockelbauteil (1, 1') aus Metall und/oder das Aufnahmebauteil (6) aus Kunststoff besteht.

13. Sanitärarmatur nach einem der vorhergehenden Ansprüche, bei der das Sockelbauteil (1, 1') und das Aufnahmebauteil (6) durch eine Schnappverbindung und/oder eine Bajonettverbindung miteinander verbunden sind.

14. Satz von Sanitärarmaturen nach einem der vorhergehenden Ansprüche, bei dem durch Austausch des Sockelbauteils (1, 1') und des Gehäuses (30) bei gleichem Aufnahmebauteil (6) in ihrer Form, ihrer Größe unterschiedliche Sanitärarmaturen verwirklichbar sind.
